# EUROPEAN PATENT APPLICATION

(11) **EP 2 348 653 A1**
(43) Date of publication of application: **27.07.2011**
(21) Application number: 10195267.9
(22) Date of filing: 15.12.2010
(51) Int. Cl.: H04H 20/06, H04H 60/50, H04H 60/54, H04H 60/79, H04H 20/67

(54) **Apparatus and method adding transmitter identification information**

(30) Priority: 21.12.2009 KR 20090127732
(71) Applicant: Electronics and Telecommunications Research Institute, Daejeon 305-700 (KR)
(72) Inventor: Park, So Ra, Daejeon (KR); Kim, Geon, Daejeon (KR); Lee, Yong Hoon, Daejeon (KR); Lee, Yong Tae, Daejeon (KR); Kim, Jin Min, Seoul (KR); Baek, Myung Sun, Seoul (KR)
(74) Representative: Betten & Resch

(57) **Abstract**

Disclosed is an apparatus and method for adding transmitter identification information. The transmitter identification information adding apparatus enables a wireless relay station within a DAB(Digital Audio Broadcasting) series transmission system to add, in a signal received from a transmitting station, separate transmitter identification information, so that a receiving station may identify whether the received signal is a signal transmitted from the wireless relay station, or a signal transmitted from the transmitting station, based on identification information.

## Description

### CROSS-REFERENCE TO RELATED APPLICATIONS

This application claims priority under 35 U.S.C. §119 to Korean Patent Application No. 10-2009-0127732, filed on December 21, 2009, the disclosure of which is incorporated herein by reference in its entirety.

### BACKGROUND OF THE INVENTION

### 1. Field of the Invention

The present invention relates to an apparatus and method for adding transmitter identification information, more particularly, to an apparatus and method that enables a wireless relay station to add, in a signal received from a transmitting station, separate transmitter identification information capable of identifying the wireless relay station.

### 2. Description of the Related Art

In general, a relay station within a Digital Audio Broadcasting (DAB) series transmission system includes a receiving antenna, a receiving unit, a transmitting unit, and a transmitting antenna. The relay station may be classified into a Radio Frequency (RF) type, an. Intermediate Frequency (IF) type, and a baseband type according to a processing scheme. The relay station is installed in a region where signals transmitted from a transmitting station are weakly received, and thereby functions to expand a sending (transmission) area of the transmitting station.

A transmitter identification information (TII) signal of DAB series contains identification information of a corresponding transmitting station in a system. The TII signal is carried in a null symbol of a signal transmitted from a transmitting station of DAB series. The TII signal includes a main identifier (ID) and a sub ID. The main ID is determined as a bitstream including 8 bits and may have a total number of 70 cases. The sub ID is expressed as numbers from 0 to 23, and indicates a location of subcarrier having a predetermined power in the TII signal.

Meanwhile, the relay station performs only a function of retransmitting transmitter identification information included in a signal transmitted from the transmitting station as is, and thus a receiving station may not identify whether the received signal is received from the transmitting station or received from the relay station. That is, when a signal of the transmitting station and a signal of the relay station are simultaneously received, there is a problem that the receiving station has a difficulty in analyzing the received signal and distinguishing two signals from each other.

### SUMMARY OF THE INVENTION

The present invention is conceived to resole the above problem and thus provides an apparatus and method for adding transmitter identification information that enables a wireless relay station to add, in a signal received from a transmitting station, separate transmitter identification information.

To achieve the aforementioned objectives, according to an aspect of the present invention, there is provided an apparatus for adding identification information, including: a receiving unit to receive a transmission signal from a transmitting station within a Digital Audio Broadcasting (DAB) series transmission system; and detecting and generating unit to find a null symbol location in the received transmission signal, and to add a transmitter identification information signal.

According to another aspect of the present invention, there is provided a method of adding transmitter identification information at a relay station within a DAB series transmission system, including: receiving a. transmission signal from a transmitting station within the transmission system; and adding a transmitter identification information signal to the received transmission signal.

According to embodiments of the present invention, a wireless relay station may add separate transmitter identification information in a signal received from a transmitting station, and thereby transmit the received signal.

In a region where signals transmitted from the transmitting station and the wireless relay station are simultaneously received, it is possible to identify each of the received signals based on identification information.

### BRIEF DESCRIPTION OF THE DRAWINGS

FIGS.1 and 2 are block diagrams to describe an apparatus for adding transmitter identification information according to an embodiment of the present invention;
FIG. 3 is a block diagram to describe a detector and a generator of FIG. 1 or FIG. 2;
FIGS. 4 and 5 are block diagrams to describe an apparatus for adding transmitter identification information according to another embodiment of the present invention;
FIG. 6 is a block diagram to describe a detector and a generator of FIG. 4 or FIG. 5;
FIG. 7 is a block diagram to describe an apparatus for adding transmitter identification information according to still another embodiment of the present invention; and
FIG. 8 is a block diagram to describe a detector and a generator of FIG. 7.

### DETAILED DESCRIPTION OF THE PREFERRED EMBODIMENTS

Advantages and features of the present invention and methods to achieve them will be elucidated from exemplary embodiment described below in detail with reference to the accompanying drawings. However, the present invention is not limited to exemplary embodiment disclosed herein but will be implemented in various forms. The exemplary embodiments are provided by way of example only so that a person of ordinary skill in the art can fully understand the disclosures of the present invention and the scope of the present invention. Therefore, the present invention will be defined only by the scope of the appended claims. Meanwhile, terms used in the preset invention are to explain exemplary embodiments rather than limiting the present invention. In the specification, a singular type may also be used as a plural type unless stated specifically. "Comprises" and/or "comprising" used herein does not exclude the existence or addition of one or more other components, steps, operations and/or elements.

An apparatus for adding transmitter identification information of the present invention may process a received transmission signal in any one type of a Radio Frequency (RF) type, an Intermediate Frequency (IF) type, and a baseband type.

An identification information signal of a transmitting station may be included in a null symbol of the transmission signal.

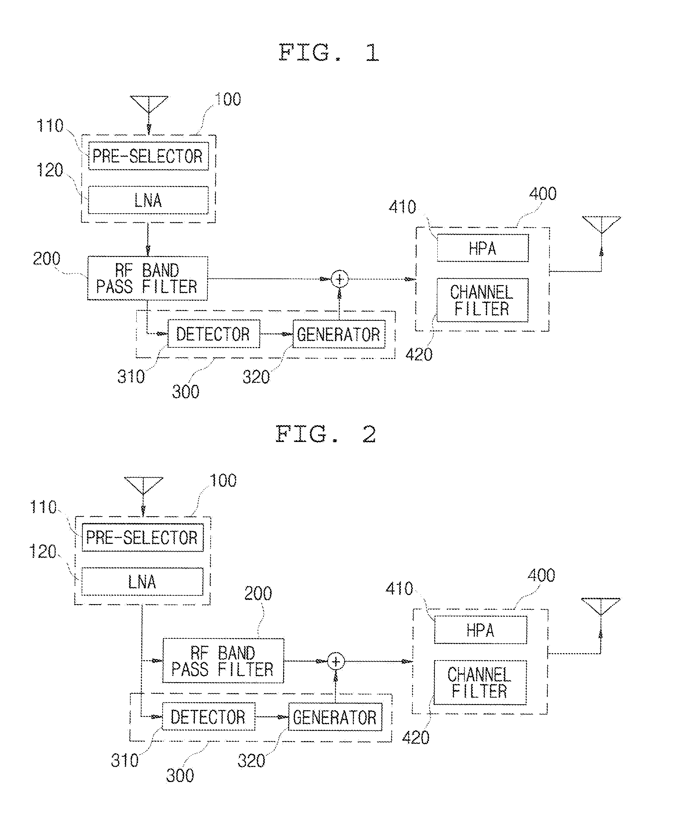

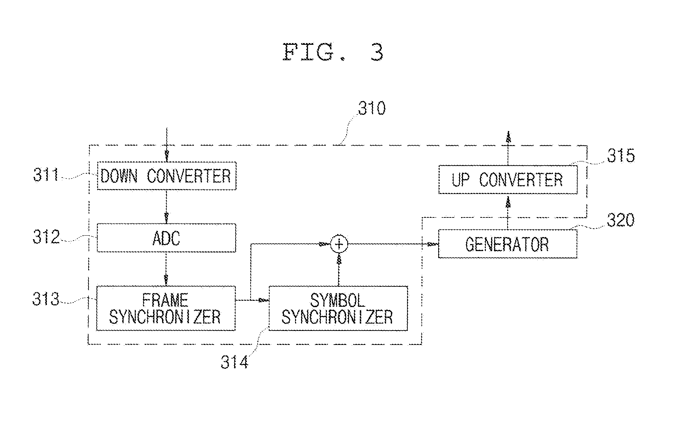

Hereinafter, an apparatus for adding transmitter identification information according to an embodiment of the present invention will be described with reference to FIGS. 1 to 3. FIGS.1 and 2 are block diagrams to describe an apparatus for adding transmitter identification information according to an embodiment of the present invention, and FIG. 3 is a block diagram to describe a detector and a generator of FIG. 1 or FIG. 2.

As shown in FIG. 1, the transmitter identification information adding apparatus according to an embodiment of the present invention may include a receiving unit 100, an RF band pass filter 200, a detecting and generating unit 300, and a transmitting unit 400, and may process a received, transmission signal to an RF type.

The receiving unit 100 may include a pre-selector 110 and a low noise amplifier (LNA) 120, and may receive a transmission signal from a transmitting station within a Digital Audio Broadcasting (DAB) series transmission system.

The RF band pass filter 200 may pass only a signal of which a frequency exists in an RF band, among received transmission signals.

The detecting and generating unit 300 may include a detector 310 and a generator 320, and may add a transmitter identification information signal in the received transmission signal.

The detector 310 may receive the transmission signal having passed through the RF band pass filter 200, or may directly receive the transmission signal from the receiving unit 100 as shown in Fig. 2. As shown in FIG. 3, the detector 310 may include a down converter 311, an analog-to-digital converter (ADC) 312, a frame synchronize 313, a symbol synchronizer 314, and an up converter 315, and may down-convert a frequency of a transferred signal via the down converter 311, and convert the down-converted transmission signal to a digital signal via the ADC 312.

After converting the transmission signal to the digital signal, the detector 310 may find an approximate null symbol location by performing a frame synchronization via the frame synchronizer 313. And the detector may find an accurate symbol location by performing a symbol synchronization via the symbol synchronizer 314 and may correct the approximate null symbol location based on the found accurate symbol location.

The generator 320 may generate a transmitter identification information signal.

The detector 310 may up-convert a frequency of the generated transmitter identification information signal via the up converter 315.

The detecting and generating unit 300 may add, in the corrected null symbol location, the transmitter identification information signal of which the frequency is up-converted.

The transmitting unit 400 may include a high power amplifier (HPA) 410 and a channel filter 420, and may receive, from the detecting and generating unit 300, the transmission signal in which the transmitter identification information signal is added and transmit the transmission signal.

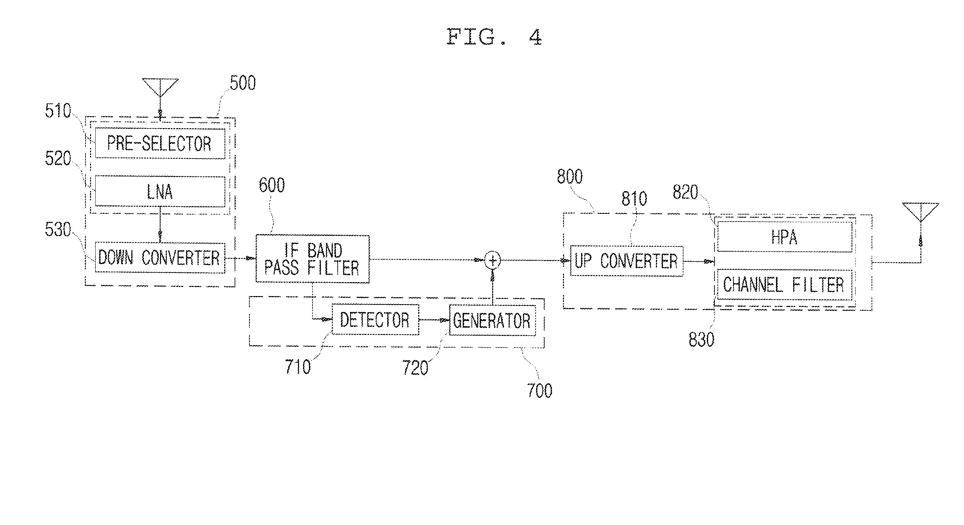

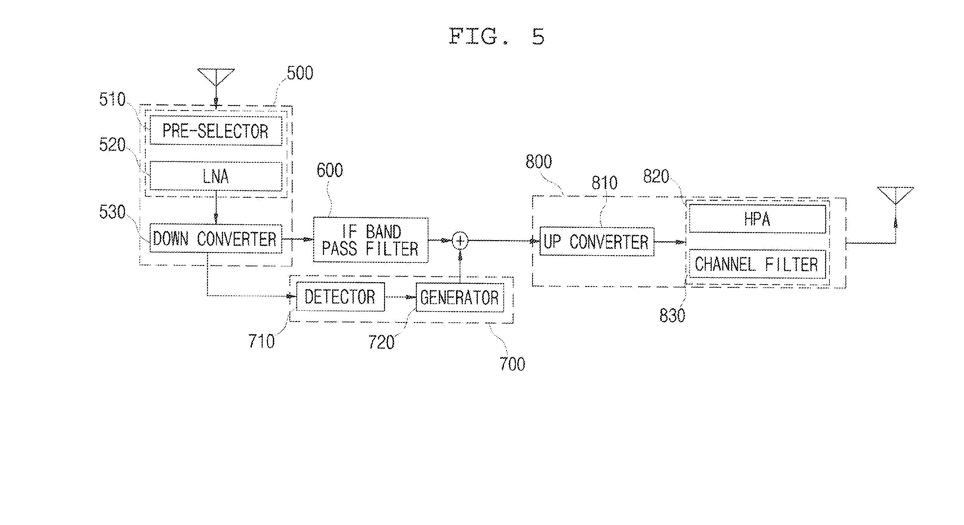

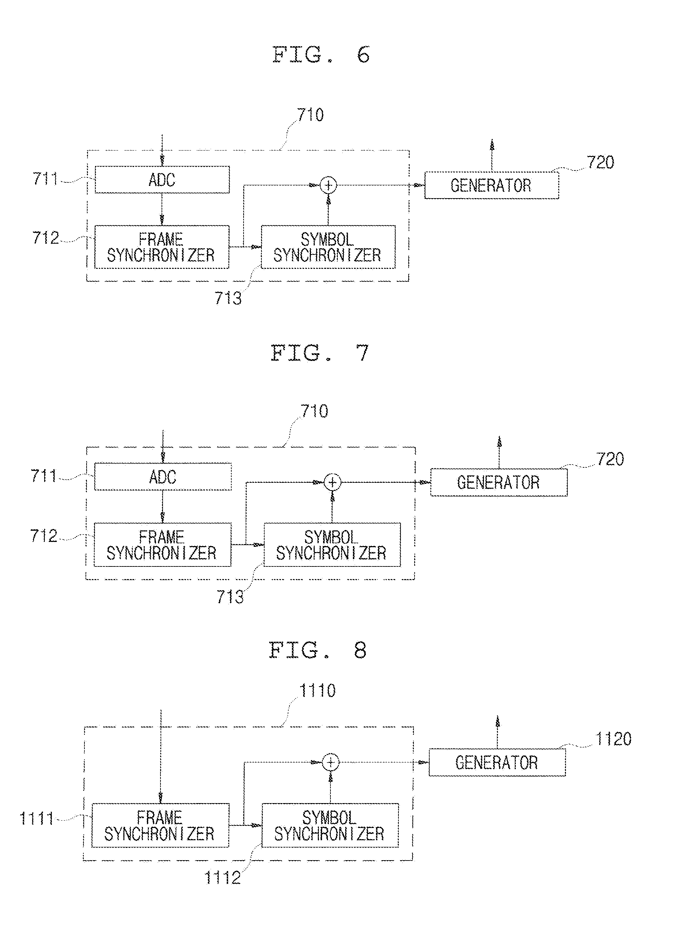

A transmitter identification information adding apparatus according to an embodiment of the present invention is described above with reference to FIGS. 1 to 3. Hereinafter, a transmitter identification information adding apparatus according to another embodiment of the present invention will be described with reference to FIGS. 4 to 6. FIGS. 4 and 5 are block diagrams to describe an apparatus for adding transmitter identification information according to another embodiment of the present invention, and FIG. 6 is a block diagram to describe a detector and a generator of FIG. 4 or FIG. 5.

As shown in FIG. 4, the transmitter identification information adding apparatus according to another embodiment of the present invention may include a receiving unit 500, an IF band pass filter 600, a detecting and generating unit 700, and a transmitting unit 800, and may process a received transmission signal to an IF type.

The receiving unit 500 may include a pre-selector 510, an LNA 520, and a down converter 530, and may receive a transmission signal from a transmitting station within a DAB series transmission system. The receiving unit 500 may down-convert a frequency of the received transmission signal via the down converter 530.

The IF band pass filter 600 may pass only a signal of which a frequency exists in an IF band, among down-converted transmission signals.

Although description is made here using the IF band pass filter 600, the present invention is not limited thereto and may be configured to use a Surface Acoustic Wave (SAW) filter.

The detecting and generating unit 700 may include a detector 710 and a generator 720.

The transmission signal having passed through the IF band pass filter 600 may be transferred to the detector 710, or the transmission signal of which the frequency is down-converted via the down converter 530 may be transferred to the detector 710 as shown in FIG. 5. As shown, in FIG. 6, the detector 710 may include an ADC 711, a frame synchronizer 712, and a symbol synchronizer 713, and may convert an input transmission signal to a digital signal via the ADC 711.

After converting the transmission signal to the digital signal, the detector 710 may find an approximate null symbol location by performing a frame synchronization via the frame synchronizer 712. The detector 710 having found the approximate null symbol location may find an accurate symbol location by performing a symbol synchronization via the symbol synchronizer 713 and may correct the approximate null symbol location based on the found accurate symbol location.

The generator 720 may generate a transmitter identification information signal.

The detecting and generating unit 700 may add, in the corrected null symbol location, the transmitter identification information signal.

The transmitting unit 800 may include an up converter 810, an HPA 820, and a channel filter 830. The transmitting unit 800 may up-convert, via the up converter 810, a frequency of the transmission signal in which the transmitter identification information signal is added, transferred from the detecting and generating unit 700, and thereby transmit the transmission signal.

A transmitter identification information adding apparatus according to another embodiment of the present invention is described above with reference to FIGS. 4 to 6. Hereinafter, a transmitter identification information adding apparatus according to still another embodiment of the present invention will be described with reference to FIGS. 7 and 8. FIG. 7 is a block diagram to describe an apparatus for adding transmitter identification information according to still another embodiment of the present invention, and FIG. 8 is a block diagram to describe a detector and a generator of FIG. 7.

As shown in FIG. 7, the transmitter identification information adding apparatus according to still another embodiment of the present invention may include a receiving unit 900, a feedback signal removing unit 1000, a detecting and generating unit 1100, and a transmitting unit 1200, and may process a received transmission signal to a baseband type.

The receiving unit 900 may include a pre-selector 910, an LNA 920, a down converter 930, and an ADC 940, and may add a transmitter identification information signal in the received transmission signal.

The down converter 930 may down-convert a frequency of the received transmission signal.

The ADC 940 may convert the down-converted transmission signal to a digital signal.

The feedback signal removing unit 1000 may include a subtraction unit 1010 and a feedback signal generator 1020, and may remove a feedback signal received by a receiving antenna, in a signal transmitted from a transmitting antenna.

The detecting and generating unit 1100 may include a. detector 1110 and a generator 1120.

The detector 1110 may receive the transmission signal of which the frequency is down-converted via the down converter 930, and which is converted to the digital signal via the ADC 940.

As shown in FIG. 8, the detector 1110 may include a frame synchronizer 1111 and a symbol synchronizer 1112, and may find an approximate null symbol location by performing a frame synchronization via the frame synchronizer 1111 with respect to the transmission signal converted to the digital signal. And the detector 1110 may find an accurate symbol location by performing a symbol synchronization via the symbol synchronizer 1112 and may correct the approximate null symbol location based on the found accurate symbol location.

The generator 1120 may generate a transmitter identification information signal.

The detecting and generating unit 1100 may add, in the corrected null symbol location, the transmitter identification information signal.

The transmitting unit 1200 may include a digital-to-analog converter (DAC) 1210, an up converter 1220, an HPA 1230, and a channel filter 1240.

The transmitting unit 1200 may receive, from the detecting and generating unit 1100, the transmission signal in which the transmitter identification information signal is added, convert the transmission signal to an analog signal via the DAC 1210, and process a frequency offset of the transmission signal converted to the analog signal via the up converter 1220, and then transmit the transmission signal output via the HPA 1230 and the channel filter 1240.

In the case of processing the received transmission signal to the baseband type, the up converter 1220 may play only a role of processing the frequency offset. In the case of processing the received transmission signal to the RF type or the IF type, the up converters 315 and 810 may process the up-conversion and the frequency offset together.

As described above, a transmitter identification information adding apparatus of the present invention may add separate transmitter identification information (wireless relay station identification information) in a signal received from a transmitting station, and thereby transmit the signal. Accordingly, in a region (receiving station) where signals transmitted from the transmitting station and the wireless relay station are simultaneously received, it is possible to identify each of the received signals based on the identification information.

Although a few exemplary embodiments of the present Invention have been shown and described, the present invention is not limited to the described exemplary embodiments. Instead, it would be appreciated by those skilled in the art that changes may be made to these exemplary embodiments without departing from the principles and spirit of the invention, the scope of which is defined by the claims and their equivalents.

## Claims

1. An apparatus for adding identification information, comprising:
a receiving unit to receive a transmission signal from a transmitting station; and
a detecting and generating unit to find a null symbol location in the received transmission signal, and to add a transmitter identification information signal.

2. The apparatus of claim 1, wherein the received transmission signal is processed in any one type of a Radio Frequency (RF) type, an Intermediate Frequency (IF) type, and a baseband type.

3. The apparatus of claim 2, wherein:
the transmitting signal contains an identification information signal of the transmitting station in the null symbol, and
the detecting and generating unit includes:
a detector to detect the null symbol location by performing a frame synchronization, to find an accurate symbol, location by performing a symbol synchronization, and to correct the detected null symbol location based on the accurate symbol location; and
a generator to generate the transmitter identification information signal, and
the detecting and generating unit adds the transmitter identification information signal in the corrected null symbol location.

4. The apparatus of claim 3, wherein in the case of processing the received transmission signals to the RF type, the detector, prior to performing the frame synchronization, down-converts a frequency of the transmission signal having passed through an RF band pass filter, converts the down-converted transmission signal to a. digital signal, and up-converts a frequency of the generated transmitter identification information signal.

5. The apparatus of claim 3, wherein in the case of processing the received transmission signal to the IF' type, the detector, prior to performing the frame synchronization, converts the input transmission signal to a digital signal when the transmission signal of which a frequency is down-converted is input via an IF band pass filter.

6. The apparatus of one of claims 3 to 5, wherein in the case of processing the received transmission signal to the baseband type, the detector detects an approximate
null symbol location by performing the frame synchronization with respect to the transmission signal converted to a digital signal when the transmission signal of which a frequency is down-converted is converted to the digital signal.

7. The apparatus of claim 6, further comprising:
a transmitting unit to transmit the transmission signal in which the transmitter identification information signal is added, transferred from the detecting and
generating unit, wherein the transmitting unit includes:
a digital-to-analog converter (day) to convert the transferred transmission signal to an analog signal; and an up converter to process a frequency offset of the transmission signal converted to the analog signal.

8. A method of adding transmitter identification information at a relay station, comprising:
receiving a transmission signal from a transmitting station; and
adding a transmitter identification information signal to the received transmission signal.

9. The method of claim 8, wherein the relay station relays the received transmission signal in any one type of an RF' type, an IF type, and a baseband type.

10. The method of claim 9, wherein:
the transmitting signal contains an identification information signal of the transmitting station in the null symbol, and
the adding includes:
detecting an approximate null symbol location by performing a frame synchronization;
finding an accurate symbol location by performing a symbol synchronization;
correcting the detected null symbol location based on the found accurate symbol location;
generating the transmitter identification information signal; and
adding the transmitter identification information signal in the corrected null symbol location.

11. The method of claim 10, wherein:
in the case the relay stations relays the received transmission signal to the RF type, the adding, prior to performing the frame synchronization, further includes:
down-converting a frequency of the transmission signal having passed through an RF band pass filter; and
converting the down-converted transmission signal to a digital signal.

12. The method of claim 11, wherein the generating includes up-converting the generated transmitter identification information signal.

13. The method of one of claims 10 to 12, wherein:
in the case the relay station relays the received transmission signal to the IF type, the adding, prior to performing the frame synchronization, further includes:
converting the input transmission signal to a digital signal when the transmission signal of which a frequency is down-converted is input via an. IF band pass filter.

14. The method of one of claims 10 to 13, wherein:
in the case the relay station relays the received transmission signal to the baseband type, the finding of the null symbol location includes:
detecting the null symbol location by performing the frame synchronization with respect to the transmission signal converted to a digital signal when the transmission signal of which a frequency is down-converted is converted to the digital signal.

15. The method of claim 14, further comprising:
transmitting the transmission signal in which the transmitter identification information signal is added,
wherein the transmitting includes:
converting the added transmission signal to an analog signal; and
professing a frequency offset of the transmission signal converted to the analog signal.
